# FASCICULE DE BREVET EUROPEEN

(11) **EP 3 895 242 B1**
(45) Date de publication et mention de la délivrance du brevet: **10.08.2022**
(21) Numéro de dépôt: 19813866.1
(22) Date de dépôt: 09.12.2019
(51) Int. Cl.: H01M 8/12, H01M 8/249, H01M 8/248

(54) **PILE A COMBUSTIBLE A STRUCTURE ANNULAIRE**
RINGFÖRMIGE BRENNSTOFFZELLENSTRUKTUR
RING SHAPED FUEL CELL STRUCTURE

(30) Priorité: 12.12.2018 FR 1872752
(43) Date de publication de la demande: 20.10.2021
(73) Titulaire: Safran Power Units, 31200 Toulouse (FR)
(72) Inventeur: QUINTON, Romain, 77550 MOISSY-CRAMAYEL (FR); JOLLYS, Jean-Baptiste, 77550 MOISSY-CRAMAYEL (FR); HORDE, Théophile, 77550 MOISSY-CRAMAYEL (FR)
(74) Mandataire: Argyma
(86) Numéro de dépôt international: PCT/EP2019/084129
(87) Numéro de publication internationale: WO 2020/120354

(56) Documents cités:
- EP-A1- 3 007 258
- WO-A1-2018/113035
- US-A- 5 993 987

## Description

### DOMAINE TECHNIQUE DE L'INVENTION

La présente invention concerne le domaine des piles à combustible, notamment dans le domaine aéronautique, et vise plus particulièrement la structure d'une pile à combustible.

### ETAT DE LA TECHNIQUE

Une pile à combustible permet de produire de l'énergie électrique à partir d'une réaction électrochimique. De manière classique, une pile à combustible est formée par un empilement de cellules dans lesquelles a lieu la réaction électrochimique. Un tel empilement est également désigné « Stack » en langue anglaise. Les cellules comportent des conduites dans lesquelles circulent différents fluides nécessaires à la réaction électrochimique et au refroidissement notamment. Des joints d'étanchéité sont montés entre chaque cellule de manière à rendre les conduites étanches.

La pile à combustible comprend en outre deux plaques terminales qui sont montées de part et d'autre de l'empilement et sur lesquelles est appliqué un effort de compression afin de prendre en sandwich les cellules et assurer l'étanchéité entre les cellules.

Pour garantir l'étanchéité sur toute la surface des cellules, il est nécessaire d'appliquer un effort uniforme sur toute la surface des cellules, notamment au moyen d'organes de traction connus de l'homme du métier sous la désignation de tirants. De manière connue, les plaques terminales présentent de grandes dimensions par rapport aux cellules afin de posséder une rigidité importante permettant d'éviter toute déformation en flexion des plaques terminales lors de la compression de l'empilement, autrement dit lors de la mise en tension des organes de traction. Cependant, de telles plaques terminales présentent un encombrement et une masse importants.

Aujourd'hui, pour produire une quantité plus importante d'énergie électrique, il existe des piles à combustible comprenant plusieurs empilements de cellules. Chaque empilement étant comprimé à l'aide de plaques terminales, l'encombrement et la masse de la pile à combustible en sont d'autant augmentés, ce qui présente un inconvénient majeur.

Il existe donc un besoin pour une pile à combustible comprenant plusieurs empilements qui présente un encombrement et une masse limités.

### PRESENTATION DE L'INVENTION

A cet effet, l'invention concerne une pile à combustible comprenant une pluralité d'empilements de cellules électrochimiques, les empilements étant associés en série les uns avec les autres de manière à former une structure périphérique.

Par « structure périphérique », on entend un assemblage en boucle des empilements définissant un centre vide. Une telle structure périphérique peut notamment se présenter sous la forme d'une structure circulaire ou polygonale dont le centre est vide.

Grâce à la pile à combustible selon l'invention, l'encombrement d'une pile à combustible comprenant plusieurs empilements est limité grâce à la structure périphérique de la pile à combustible permettant de libérer de la place au centre de cette structure. En outre, un montage structurel en série permet avantageusement au premier empilement d'être en contact avec le dernier empilement. Il n'est avantageusement plus nécessaire d'utiliser des plaques terminales pour chaque empilement. Grâce à l'invention, la pile à combustible comporte un encombrement limité et une masse réduite.

Selon l'invention, la De pile à combustible comprend une pluralité de modules montés en série les uns avec les autres de manière à former la structure périphérique, chaque module comprenant deux organes d'extrémité et un empilement monté entre deux organes d'extrémité. La pile à combustible présente ainsi une structure modulaire ce qui rend aisée une opération de maintenance de la pile à combustible. Chaque module peut être remplacé de manière indépendante. De préférence, les modules sont identiques.

De manière préférée, chaque module comporte des moyens de maintien reliant les organes d'extrémité afin de maintenir l'empilement contraint entre les organes d'extrémité. De tels moyens de maintien permettent de faciliter l'assemblage des empilements de manière modulaire. Autrement dit, on peut former un module comportant un empilement et deux organes d'extrémité qui sont maintenus ensemble pour faciliter leur montage. De tels moyens de maintien n'assurent pas une compression suffisante pour assurer l'étanchéité entre les cellules de l'empilement mais limitent tout risque de désassemblage.

De préférence, chaque organe d'extrémité comprend une pluralité de conduites internes configurées pour permettre la circulation de fluides dans les empilements. Les fluides circulent dans chaque empilement indépendamment, ce qui permet d'optimiser une telle circulation. Les organes d'extrémité remplissent une première fonction de compression et une deuxième fonction de liaison fluidique pour permettre une alimentation en série ou en parallèle.

Selon une première forme de réalisation, les modules sont montés directement en série. Une telle pile à combustible est simple à fabriquer et à assembler à partir de modules identiques pouvant directement être assemblés ensemble.

De manière préférée, chaque organe d'extrémité comporte une face de montage en contact avec l'une des extrémités d'un empilement et une face d'interface en contact avec une autre face d'interface d'un autre organe d'extrémité. La face de montage participe avantageusement à la compression des cellules d'un empilement.

De préférence, chaque conduite interne débouche dans les faces de montage et d'interface de l'organe d'extrémité afin de permettre la circulation de fluide entre deux empilements successifs, c'est-à-dire, en série. Ainsi, l'alimentation et l'évacuation des fluides sont communes à plusieurs empilements, ce qui permet de limiter la complexité, l'encombrement et la masse du système d'alimentation et d'évacuation de la pile.

Selon l'invention, la face de montage et la face d'interface sont écartées angulairement d'un angle a, qui est compris entre 0,5° et 60°. Un tel angle permet de donner une forme périphérique à la pile à combustible.

Selon une deuxième forme de réalisation, la pile à combustible comprend une pluralité d'organes intermédiaires indépendants, chaque organe intermédiaire étant monté entre deux modules successifs. De préférence, chaque module comporte deux faces d'extrémité qui sont parallèles. Un tel module, rectiligne ou droit, possède une conception simple et peu coûteuse, ce qui est avantageux. La forme périphérique est avantageusement conférée par les organes intermédiaires.

De préférence, la pile à combustible comprend des moyens de serrage montés à la périphérie extérieure de la pile à combustible de manière à comprimer les empilements. De préférence, les moyens de serrage appliquent un effort direct sur les organes d'extrémité et/ou intermédiaires pour comprimer indirectement les empilements. Ceci permet de comprimer de manière homogène les cellules des différents empilements et ainsi d'optimiser l'étanchéité entre les cellules. De préférence, les moyens de serrage ne sont pas en contact direct avec les empilements afin de ne pas interférer avec la compression des cellules des empilements et l'étanchéité entre les cellules. De manière avantageuse, les moyens de serrage appliquent un effort de compression dirigé vers le centre de la structure périphérique (sensiblement radial) qui est converti en un effort de compression orthogonal à chaque face de montage, c'est-à-dire, selon l'axe de l'empilement.

De préférence, les moyens de serrage comprennent une sangle montée à la circonférence de la structure périphérique. De préférence, la sangle est périphérique. Ainsi, une unique sangle permet de comprimer les cellules de la pile, ce qui limite le nombre d'éléments nécessaires et permet une compression homogène dans l'ensemble des empilements.

De manière préférée, chaque organe d'extrémité comprend une rainure de montage configurée pour coopérer avec les moyens de serrage. De préférence, la rainure de montage est formée sur une surface radialement extérieure de l'organe d'extrémité par rapport au centre de la structure périphérique. La sangle est ainsi guidée lors du serrage afin d'optimiser l'effort de compression exercé sur la structure périphérique. De plus, la sangle applique l'effort de compression sur les organes d'extrémité afin d'éviter toute contrainte en flexion sur les empilements.

Selon un autre aspect de l'invention, la pile à combustible comprend un premier empilement et un deuxième empilement qui sont reliés par un système d'interface comportant deux faces de montage qui sont adaptées pour coopérer respectivement avec le premier empilement et le deuxième empilement. De manière préférée, les faces de montage sont obliques et, de préférence, écartées d'un angle d'interface compris entre 1° et 120°. Selon une première forme de réalisation, le système d'interface est constitué de deux organes d'extrémité. Selon une deuxième forme de réalisation, le système d'interface est constitué de deux organes d'extrémité et d'un organe intermédiaire.

Ainsi, chaque système d'interface remplit une fonction de cale angulaire permettant de former la structure périphérique. De manière avantageuse, des empilements classiques peuvent être assemblés afin de former la structure périphérique grâce aux cales angulaires. L'angle d'interface permet de paramétrer la dimension de la structure périphérique. Plus l'angle d'interface est petit, plus la structure périphérique sera grande. Au contraire, plus l'angle d'interface est grand, plus la structure périphérique sera petite. Un angle d'interface compris entre 30° et 90° permet d'assurer un bon compromis entre puissance et encombrement. Grâce à l'invention, on peut paramétrer la dimension de la structure en utilisant des organes d'interface adaptés, les empilements demeurants avantageusement identiques.

L'invention concerne également un procédé de réalisation d'une pile à combustible telle que présentée précédemment, ledit procédé comprenant :
- une étape d'assemblage en série d'une pluralité d'empilements de cellules électrochimiques de manière à former une structure périphérique, et
- une étape de serrage de la structure périphérique afin de comprimer les cellules des empilements.

Grâce au procédé selon l'invention, les empilements sont comprimés grâce au serrage de la structure périphérique. Ceci permet d'exercer un effort de compression sur l'ensemble des empilements de cellules à l'aide, par exemple, d'une unique sangle. De plus, l'effort de compression est homogène dans tous les empilements.

De préférence, le procédé comprend une étape de pré-contrainte des cellules empilées afin de les maintenir ensemble durant l'étape d'assemblage. Ainsi, les cellules de chaque empilement sont maintenues, ce qui rend aisé l'assemblage des empilements.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
[Fig. 1] est une vue schématique d'une pile à combustible selon l'invention,
[Fig. 2] est une vue schématique de dessus d'un premier module d'une pile à combustible,
[Fig. 3] est une vue schématique d'un organe d'extrémité d'un premier module de la figure 2,
[Fig. 4] est une vue schématique d'un ensemble de deux organes d'extrémité pour former un système d'interface,
[Fig. 5] est une vue schématique d'un premier module avec une première forme de réalisation d'un organe d'extrémité,
[Fig. 6] est une vue schématique d'un premier module avec une deuxième forme de réalisation d'un organe d'extrémité,
[Fig. 7] est une vue schématique de dessus d'un deuxième module d'une pile à combustible monté entre deux organes intermédiaires et
[Fig. 8] est une vue schématique d'un ensemble de deux organes d'extrémité et d'un organe intermédiaire pour former un système d'interface.

Il faut noter que les figures exposent l'invention de manière détaillée pour mettre en œuvre l'invention, lesdites figures pouvant bien entendu servir à mieux définir l'invention le cas échéant.

### DESCRIPTION DETAILLEE DE L'INVENTION

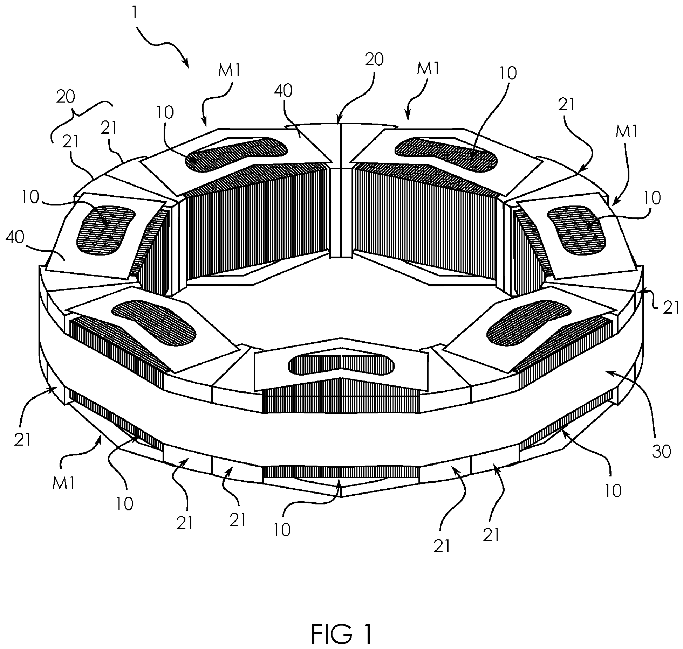

Il est représenté sur la figure 1 une pile à combustible 1 générant de l'énergie électrique à partir d'une réaction électrochimique.

De manière classique, différents fluides circulent à travers la pile à combustible 1 afin de réagir ensemble et ainsi générer de l'énergie électrique. Une telle réaction peut notamment être une réaction d'oxydo-réduction entre du dioxygène et du dihydrogène. La pile à combustible 1 est ainsi alimentée en dioxygène et en dihydrogène. La réaction d'oxydo-réduction génère également de l'eau qui est évacuée de la pile à combustible 1. Dans un mode de réalisation préféré, la pile à combustible 1 est une pile à combustible à haute température dans laquelle l'eau générée par la réaction est à l'état de vapeur. En effet, de l'eau à l'état de vapeur est aisément évacuée comme cela sera décrit par la suite.

La pile à combustible 1 est également alimentée en fluide de refroidissement afin d'évacuer la chaleur générée par la réaction électrochimique. Un tel fluide de refroidissement est un fluide caloporteur, tel que de l'huile ou de l'eau qui peut être mélangé avec des additifs.

Selon l'invention, en référence à la figure 1, la pile à combustible 1 comprend une pluralité d'empilements 10 de cellules électrochimiques, les empilements 10 étant associés en série les uns avec les autres de manière à former une structure périphérique. La pile à combustible 1 comprend une pluralité d'empilements 10 reliés les uns aux autres par une pluralité de systèmes d'interface 20 et des moyens de serrage 30 en contact avec les systèmes d'interface 20 pour comprimer entre elles les cellules de chaque empilement 10.

Chaque empilement 10 comprend une pluralité de cellules empilées les unes avec les autres. Les empilements 10 étant identiques, un uniquement empilement 10 va maintenant être présenté par soucis de clarté.

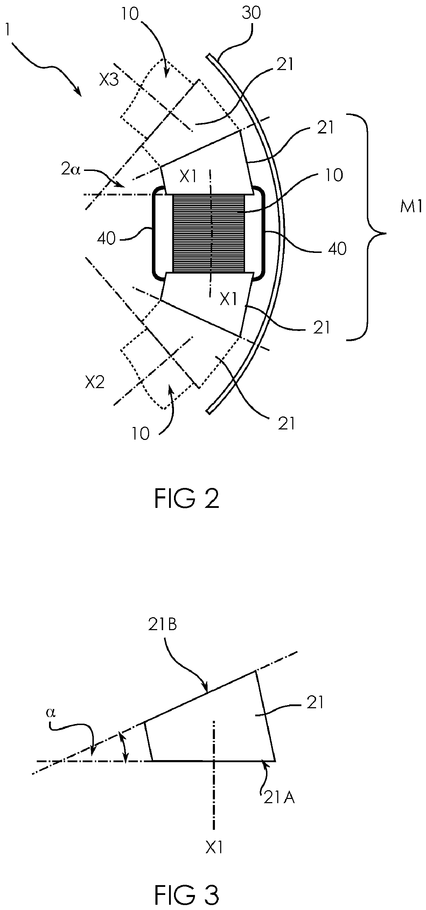

Comme illustré sur la figure 2, les cellules de l'empilement 10 sont empilées selon un axe longitudinal X1 afin de former une pile de cellules. L'empilement 10 s'étend ainsi selon l'axe X1 entre deux extrémités. Chaque cellule se présente sous la forme d'une plaque s'étendant sensiblement orthogonalement à l'axe X1.

Une cellule comprend deux électrodes aux niveaux desquelles a lieu la réaction électrochimique générant de l'énergie électrique. Pour réaliser une telle réaction, une cellule est alimentée en différents fluides, notamment en dioxygène et en dihydrogène. Une telle cellule est également désignée cellule électrochimique.

Une cellule comprend des ouvertures, également désignées « découpes », traversant la plaque. Les ouvertures des différentes cellules sont alignées les unes avec les autres de manière à former des canalisations s'étendant longitudinalement selon l'axe X1. Des joints d'étanchéités (non représentés) sont placés entre deux cellules adjacentes et comprennent des ouvertures afin d'étanchéifier les canalisations entre elles, tout en permettant la canalisation des fluides sur les faces de chaque cellule. Lorsque les cellules sont comprimées, les joints d'étanchéités placés entre les cellules sont comprimés afin d'assurer l'étanchéité des canalisations.

Dans cet exemple, l'empilement 10 comprend trois canalisations d'alimentation et trois canalisations d'évacuation permettant la circulation séparée de trois fluides à travers les cellules : du dihydrogène, du dioxygène et un liquide de refroidissement. L'eau à l'état de vapeur générée par la réaction d'oxydo-réduction n'a avantageusement pas besoin de canalisation pour être évacuée, ce qui limite la complexité de l'empilement 10 et rend une telle évacuation aisée. Une telle structure d'un empilement 10 étant connue, elle ne sera pas décrite plus en détails.

Selon l'invention, les empilements 10 sont montés successivement les uns avec les autres de manière à former une structure périphérique comme illustré sur la figure 1. Autrement dit, la structure périphérique de la pile à combustion 1 est formée de plusieurs empilements 10 répartis à la circonférence de la structure périphérique. Autrement dit encore, chaque empilement 10 est relié à deux autres empilements 10 placés de part et d'autre de l'empilement 10 afin de réaliser un montage en série. Pour permettre un tel montage, les systèmes d'interface 20 sont montés entre deux empilements 10 successifs.

Sur la figure 1, l'assemblage d'empilements 10 forme une structure périphérique de forme polygonale. Cependant, Les empilements 10 pourraient également présenter une forme courbe, chaque cellule comprenant alors une épaisseur variable sur sa surface, afin de former une structure périphérique de forme circulaire. Dans ces deux modes de réalisation, la structure périphérique présente une forme de boucle définissant un espace vide au centre de la structure périphérique. La structure périphérique forme ainsi une enceinte autour de cet espace vide. Un tel espace vide peut être mis à profit pour y placer d'autres équipements de la pile à combustible 1 et ainsi limiter son encombrement. Par la suite, on définit un centre pour la structure périphérique et les termes « radialement intérieur » et « radialement extérieur » sont définis par rapport au centre de la structure périphérique.

Comme illustré sur la figure 1, chaque système d'interface 20 est monté entre deux empilements 10 successifs. La structure et la fonction de chaque système d'interface 20 va être présentée plus en détails en référence aux formes de réalisation qui vont être dorénavant présentées.

En référence à la figure 1, la pile à combustible 1 comprend une pluralité de premiers modules M1 montés directement en série les uns avec les autres de manière à former la structure périphérique de la pile à combustible 1.

Comme illustré à la figure 2, chaque premier module M1 comprend deux organes d'extrémité 21 et un empilement 10 monté entre les deux organes d'extrémité 21. Les premiers modules M1 sont montés directement en série, les organes d'extrémité 21 remplissant également une fonction d'interface afin de permettre de modifier l'orientation des empilements 10 les uns avec les autres. Du fait de sa structure modulaire, le nombre d'éléments nécessaires est réduit pour former la structure périphérique.

Comme illustré sur les figures 1 à 4, chaque organe d'extrémité 21 possède une forme de cale et comprend une face de montage 21A en contact avec l'une des extrémités d'un empilement 10 et une face d'interface 21B opposée à la face de montage 21A et destinée à venir en contact avec une autre face d'interface 21B d'un autre organe d'extrémité 21. L'empilement 10 est monté de manière étanche entre les faces de montage 21A des organes d'extrémité 21. La face de montage 21A s'étend orthogonalement à l'axe X1 selon lequel s'étend l'empilement 10. Comme illustré à la figure 3, dans le plan de la structure périphérique, la face de montage 21A et la face d'interface 21B sont écartées angulairement d'un angle a, qui est compris entre 0,5° et 60°, de préférence, entre 15° et 45°.

Chaque organe d'extrémité 21 comprend des conduites internes d'alimentation et d'évacuation de fluides. Ces conduites internes permettent au dihydrogène, au dioxygène et au liquide de refroidissement de circuler dans les cellules d'un empilement 10 afin d'assurer le bon fonctionnement de la réaction électrochimique. Les conduites internes sont reliées fluidiquement aux canalisations de l'empilement 10 et/ou à un bloc d'alimentation en fluides. Un organe d'extrémité 21 est ainsi monté de manière étanche sur un empilement 10, notamment à l'aide d'un joint d'étanchéité monté entre eux, afin permettre l'échange de fluides entre l'organe d'extrémité 21 et l'empilement 10.

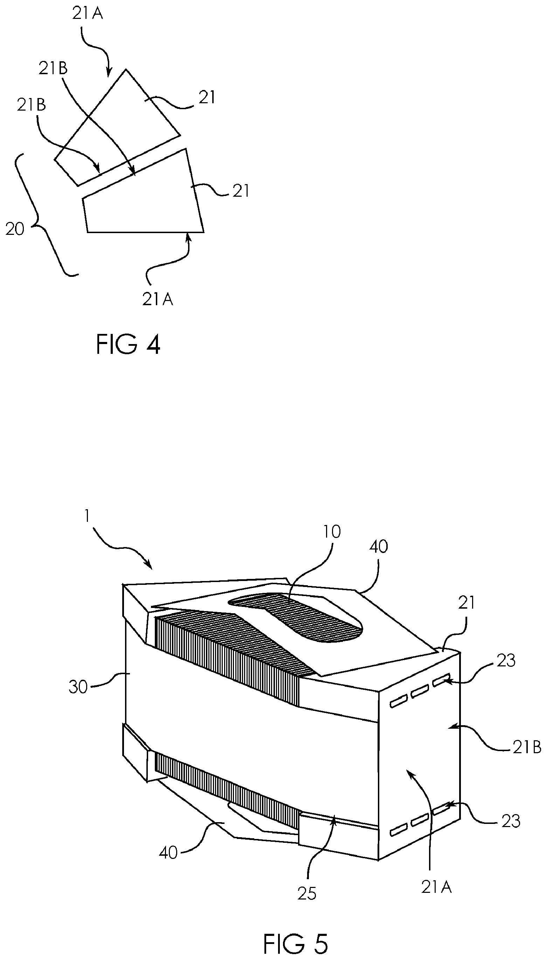

En référence à la figure 5, selon une première forme de réalisation, chaque organe d'extrémité 21 comporte des conduites internes débouchant au niveau de la face de montage 21A (non visible) et au niveau de la face d'interface 21B selon des orifices de communication 23. Lorsque deux organes d'extrémité 21 sont montés de manière adjacente selon leurs faces d'interface 21B, les orifices de communication 23 desdites faces d'interface 21B sont alignés afin de mettre en communication fluidique plusieurs empilements 10 successifs. Ainsi, l'alimentation et l'évacuation des fluides sont communes à l'ensemble des empilements 10. Ceci permet de limiter le nombre d'entrées et de sorties de fluides de la pile à combustible 1. Les empilements 10 sont reliés fluidiquement en série.

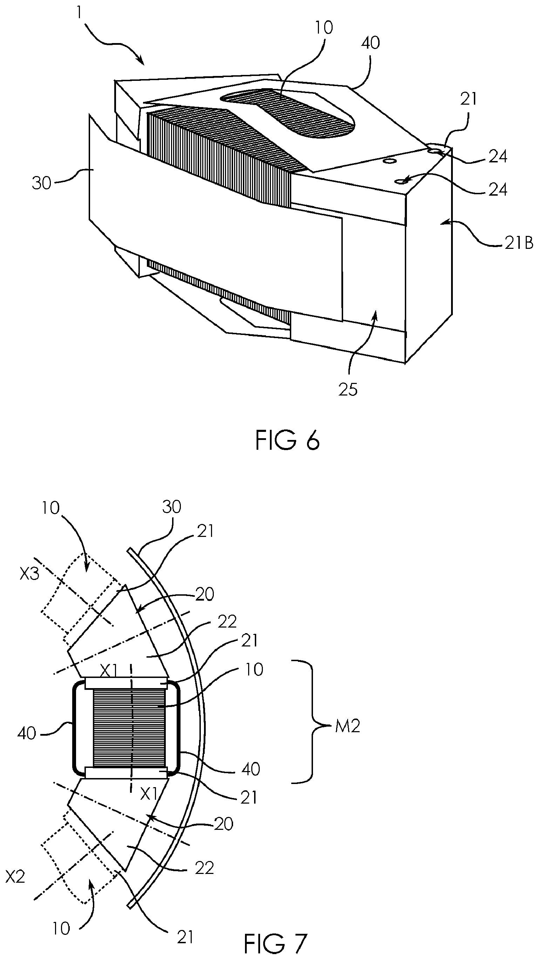

Selon une deuxième forme de réalisation, en référence à la figure 6, un organe d'extrémité 21 comporte des conduites internes débouchant, d'une part, au niveau de la face de montage 21A et, d'autre part, au niveau d'une face orthogonale à la face de montage 12A selon des orifices d'alimentation 24. Un tel organe d'extrémité 21 permet de participer à l'alimentation et à l'évacuation des fluides de l'empilement 10. Un tel organe d'extrémité 21 permet de former une entrée de fluide ou une sortie de fluide pour la pile à combustible. De manière alternative, avec de tels organes d'extrémité 21, chaque empilement 10 peut être alimenté de manière individuelle en fluides. Les alimentations sont ségréguées. Ainsi, de manière avantageuse, les empilements 10 peuvent être associés fluidiquement en série ou en parallèle.

En référence à la figure 4, lorsque la pile à combustible 1 comporte des premiers modules M1, le système d'interface 20, séparant deux empilements 10, est formé des deux organes d'extrémité 21 de deux premiers modules M1 adjacents. Les faces de montage 21A de deux organes d'extrémité 21 permettent d'écarter angulairement deux empilements successifs 10 d'un angle d'interface égal à 2a comme illustré à la figure 2. Les deux faces de montage 21A s'étendent respectivement orthogonalement aux axes X1, X3 des empilements 10. Comme cela sera présenté par la suite, cela permet avantageusement aux organes d'extrémité 21 d'exercer un effort de compression axiale sur chaque empilement 10 de manière à assurer, notamment, l'étanchéité.

De manière préférée, l'angle d'interface est compris entre 1° et 120°. L'angle d'interface permet de paramétrer la dimension de la structure périphérique. Plus l'angle d'interface est petit, plus la structure périphérique sera grande. Au contraire, plus l'angle d'interface est grand, plus la structure périphérique sera petite. Un angle d'interface compris entre 30° et 90° permet d'assurer un bon compromis entre capacité et encombrement. Grâce à l'invention, on peut paramétrer la dimension de la structure en utilisant des systèmes d'interface 20 adaptés, les empilements 10 demeurants avantageusement identiques. Dans cet exemple, la pile à combustible 1 possède un rayon intérieur compris entre 35 et 40 cm.

La pile à combustible 1 comprend en outre des moyens de maintien permettant de maintenir ensemble les cellules d'un empilement 10 pour éviter tout désassemblage. De manière préférée, chaque premier module M1 comporte des moyens de maintien. Comme illustré sur les figures 1, 5 et 6, les moyens de maintien se présentent sous la forme de lames de ressort 40 mais il va de soi que d'autres moyens de maintien pourraient convenir, par exemple, des sangles ou des tirants externes. Des moyens de maintien élastiques sont avantageux car ils permettent de se déformer lors du serrage définitif. Chaque lame de ressort 40 comprend deux extrémités de montage reliées entre elles par une portion élastique. Chaque extrémité de montage est montée sur un organe d'extrémité 21 monté au niveau d'une extrémité de l'empilement 10. Autrement dit, une lame de ressort 40 est montée sur les deux organes d'extrémité 21 montés aux deux extrémités de l'empilement 10. La portion élastique est configurée pour se déformer lors du montage des extrémités de montage afin d'exercer un effort de compression selon l'axe X1. La portion élastique est également configurée pour se déformer lorsque l'empilement 10 est comprimé par les moyens de serrage comme cela sera décrit par la suite. Autrement dit, les lames de ressort 40 permettent de pré-comprimer les cellules de l'empilement 10 par l'intermédiaire des organes d'extrémité 21 afin de les maintenir en place et ainsi faciliter l'assemblage de la structure périphérique de la pile à combustible 1.

Comme illustré sur les figures 5 et 6, la pile à combustible 1 comprend deux lames de ressort 40 montées de part et d'autre de l'empilement 10 afin de comprimer les cellules de manière homogène selon l'axe X1. De manière préférée, chaque lame ressort 40 est évidée afin de permettre une évacuation de la chaleur, notamment générée par l'empilement 10, par cet évidement.

Selon un aspect de l'invention, un empilement 10, deux organes d'extrémité 21 et deux lames de ressort 40 reliant les organes d'extrémité 21 forment ensemble un premier module M1 pouvant être aisément être manipulé et assemblé. Une pluralité de premiers modules M1 sont assemblés successivement afin de former la pile à combustible 1 comme cela sera présenté par la suite.

Comme illustré à la figure 1, la pile à combustible 1 comprend des moyens de serrage 30 montés à la périphérie extérieure de la pile à combustible 1 de manière à comprimer les premiers modules M1 ensemble. Autrement dit, les moyens de serrage appliquent un effort pour comprimer indirectement les empilements. Ceci permet de comprimer de manière homogène les cellules des différents empilements et ainsi d'optimiser l'étanchéité entre les cellules. De préférence, les moyens de serrage ne sont pas en contact direct avec les empilements 10 afin de ne pas interférer avec la compression des cellules des empilements et l'étanchéité entre les cellules. De manière avantageuse, les moyens de serrage appliquent un effort de compression dirigé vers le centre de la structure périphérique (sensiblement radial) qui est converti en un effort de compression selon l'axe de chaque empilement 10.

En référence à la figure 1, les moyens de serrage se présentent sous la forme d'une sangle 30. La sangle 30 peut être serrée de manière classique autour de la structure périphérique.

Comme illustré aux figures 5 et 6, chaque organe d'extrémité 21 comprend également une rainure de montage 25 permettant de monter et guider les moyens de serrage. Une telle rainure de montage 25 est formée sur la face radialement extérieure de l'organe d'extrémité 21. Ainsi, les moyens de serrage 30 sont montés en contact avec les organes d'extrémités 21. Les moyens de serrage 30 ne sont pas en contact avec les empilements 10. Ceci permet d'éviter toute déformation en flexion des empilements 10 comme cela sera décrit par la suite. Les moyens de serrage sont montés à la périphérie extérieure de la structure périphérique de la pile à combustible 1. Les moyens de serrage sont montés dans les rainures 25 des organes d'extrémité 21 afin d'être maintenus en place et guidés lors du serrage.

De manière avantageuse, comme chaque organe d'extrémité 21 est sollicité en compression et n'est plus sollicité en flexion, l'organe d'extrémité 21 peut être réalisé dans un matériau moins résistant et donc moins lourd et onéreux.

Suite au serrage, le diamètre de la structure périphérique est réduit. Du fait de la forme de cale de chaque organe d'extrémité 21, l'effort de serrage induit un effort radial sur les organes d'extrémité 21 qui se traduit en un effort de compression orthogonal à chaque face de montage 21A. Les cellules des différents empilements 10 sont alors comprimées les unes aux autres ce qui a pour effet de comprimer les joints d'étanchéité et ainsi assurer l'étanchéité au niveau des cellules. Il a été présenté une sangle 30 mais il va de soi que les moyens de serrage pourraient se présenter sous toute autre forme, notamment une courroie.

Avantageusement, la sangle 30 est configurée pour s'adapter aux dilatations thermiques des empilements 10 durant le fonctionnement de la pile à combustible 1, ce qui permet de maintenir les cellules comprimées au cours du temps.

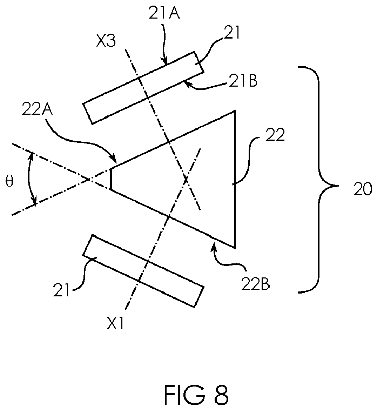

Selon une forme de réalisation illustrée sur les figures 7 et 8, la pile à combustible 1 comprend une pluralité de modules M2 et une pluralité d'organes intermédiaires montés de manière alternée les uns avec les autres de manière à former la structure périphérique. Par souci de clarté, les modules M2 sont désignés deuxièmes modules M2.

De manière analogue à précédemment, chaque deuxième module M2 comprend deux organes d'extrémité 21 et un empilement 10 monté entre les deux organes d'extrémité 21. Dans cette forme de réalisation, l'organe d'extrémité 21 ne se présente pas sous la forme d'une cale présentant une face de montage 21A et une face d'interface 21B qui sont obliques. L'organe d'extrémité 21 comporte une face de montage 21A et une face d'interface 21B qui sont parallèles, son coût étant réduit.

De manière analogue à précédemment, chaque organe d'extrémité 21 comporte des conduites internes débouchant au niveau de la face de montage 21A et au niveau de la face d'interface 21B. De même, chaque deuxième module M2 comporte des moyens de maintien 40 reliant les organes d'extrémité 21 de manière à maintenir l'ensemble. Un organe d'extrémité 21 ayant été présenté précédemment, il ne sera pas de nouveau décrit.

Dans cette forme de réalisation, en référence aux figures 7 et 8, l'organe intermédiaire 22 se présente sous la forme d'une cale comportant deux faces 22A, 22B qui sont obliques de manière à coopérer avec deux deuxièmes modules M2 différents afin de changer leur orientation. Par la suite, on désigne par Θ l'angle intermédiaire formé entre les deux faces 22A, 22B de l'organe intermédiaire 22. L'angle intermédiaire Θ, qui correspond à l'angle d'interface, est compris entre 1° et 120°, de préférence, entre 30° et 90°.

De manière analogue à un organe d'extrémité, un organe intermédiaire 22 comporte des conduites internes afin de mettre en relation fluidique les deuxièmes modules M2 avec lesquels il est en contact.

Dans cette deuxième forme de réalisation, l'organe d'extrémité 21 possède une structure plus simple, ce qui permet de diminuer le coût de fabrication. De manière avantageuse, avec un même deuxième module M2, plusieurs dimensions de pile à combustible peuvent être réalisées en choisissant les organes intermédiaires 22 ayant l'angle intermédiaire Θ adapté.

Il va maintenant être présenté un procédé de réalisation d'une pile à combustible 1 selon l'invention.

Tout d'abord, des cellules sont empilées afin de former les empilements 10. Dans ce but, les cellules sont placées les unes sur les autres à l'aide des guides insérés dans les orifices de guidage afin que les différentes ouvertures des cellules soient alignées.

Un organe d'extrémité 21 est ensuite monté à chaque extrémité de l'empilement 10 et les lames de ressort 40 sont montées sur les organes d'extrémité 21 afin de pré-comprimer les cellules de l'empilement 10. Dans ce but, les extrémités de montage de chaque lame de ressort 40 sont montées dans les encoches des organes d'extrémité 21. Pour monter deux extrémités de montage, la portion élastique se déforme ce qui a pour effet de comprimer les cellules lorsque les extrémités de montage sont montées. L'empilement 10, les deux organes d'extrémité 21 et les lames de ressort 40 forment ainsi un ensemble qui peut aisément être manipulé sans risque de désempilement des cellules qui sont maintenues par les lames de ressort 40. Lors du montage d'un empilement 10 sur un organe d'extrémité 21, ces derniers sont reliés fluidiquement afin de permettre la circulation des fluides.

Pour former une pile à combustible à partir de premiers modules M1, les premiers modules M1 sont montés directement les uns avec les autres afin de former la structure périphérique de la pile à combustible 1. Deux empilements successifs sont écartés angulairement d'une valeur 2a. La structure périphérique peut alors être serrée à l'aide d'une sangle 30 comme décrit précédemment afin de comprimer la structure périphérique.

Cet effort radial est transmis aux empilements 10 de manière à exercer un effort de compression. Ainsi, chaque empilement 10 est comprimé selon son axe et n'est pas déformé en flexion, ce qui permet de garantir l'étanchéité entre les cellules. Lors du serrage, la portion élastique des lames de ressort 40 est déformée afin de permettre une compression plus importante des cellules et assurer l'étanchéité. La pile à combustible 1 est reliée fluidiquement à un système d'alimentation en fluide, notamment en dihydrogène, en dioxygène et en fluide de refroidissement.

Pour former une pile à combustible à partir de deuxièmes modules M2, des organes intermédiaires 22 et des deuxièmes modules M2 sont montés de manière alternée afin de modifier l'orientation angulaire des empilements 10 les uns par rapport aux autres. Deux empilements successifs sont écartés angulairement d'une valeur Θ. Les organes intermédiaires 22 et les deuxièmes modules M2 sont en communication fluidique afin de permettre la circulation des fluides. La structure périphérique peut alors être serrée à l'aide d'une sangle 30 comme décrit précédemment.

Selon un aspect de l'invention, un empilement 10 de la structure périphérique peut être remplacé par un module d'alimentation en fluides, en particulier, si les dimensions des systèmes d'interface 20 ne permettent pas de prévoir des orifices d'alimentation 24.

Une telle structure périphérique, dans laquelle les empilements 10 présentent différentes orientations, est particulièrement avantageuse pour une pile à combustible à haute température. En effet, la vapeur d'eau générée par la réaction peut être aisément évacuée d'un empilement 10 quelle que soit l'orientation de l'empilement 10.

De manière préférée, la pile à combustible peut être positionnée à plat, c'est-à-dire dans un plan horizontal, à proximité du centre d'un drone dont la structure axisymétrique est compatible avec la forme annulaire de la pile.

Pour des appareils longitudinaux, par exemple, un aéronef ou un sous-marin, la pile à combustible peut avantageusement être positionnée dans un plan vertical pour limiter son encombrement dans la structure cylindrique d'un tel appareil.

De manière avantageuse, l'espace au centre de la structure périphérique peut être utilisé pour loger d'autres équipements, notamment, des équipements liés à la pile à combustible (réservoirs, etc.) afin de limiter la longueur des connexions et obtenir un ensemble compact.

## Revendications

1. Pile à combustible (1) comprenant une pluralité de modules (M1, M2) montés en série les uns avec les autres de manière à former une structure périphérique, chaque module (M1, M2) comprenant deux organes d'extrémité (21) et un empilement de cellules électrochimiques (10) monté entre deux organes d'extrémité (21), chaque organe d'extrémité (21) comportant une face de montage (21A) en contact avec l'une des extrémités d'un empilement (10) et une face d'interface (21B) en contact avec une autre face d'interface (21B) d'un autre organe d'extrémité (21), la face de montage (21A) et la face d'interface (21B) étant écartées angulairement d'un angle a, qui est compris entre 0,5° et 60°.

2. Pile à combustible (1) selon la revendication précédente, dans laquelle, chaque module (M1) comporte des moyens de maintien reliant les organes d'extrémité (21) afin de maintenir l'empilement (10) contraint entre les organes d'extrémité (21).

3. Pile à combustible (1) selon la revendication précédente, dans laquelle, les moyens de maintien (40) se présentent sous la forme de lames de ressort (40).

4. Pile à combustible (1) selon l'une des revendications 1 à 3, dans laquelle chaque organe d'extrémité (21) comprend une pluralité de conduites internes configurées pour permettre la circulation de fluides dans les empilements (10).

5. Pile à combustible (1) selon l'une des revendications 1 à 4, dans laquelle les modules (M1) sont montés directement en série.

6. Pile à combustible (1) selon l'une des revendications précédentes, comprenant des moyens de serrage (30) montés à la périphérie extérieure de la pile à combustible (1) de manière à comprimer les empilements (10).

7. Pile à combustible (1) selon la revendication 6, dans lequel les moyens de serrage comprennent une sangle montée à la circonférence de la structure périphérique.

8. Pile à combustible (1) selon l'une des revendications 6 à 7, dans lequel chaque organe d'extrémité (21) comprend une rainure de montage configurée pour coopérer avec les moyens de serrage.

9. Procédé de réalisation d'une pile à combustible (1) selon l'une des revendications 1 à 8, ledit procédé comprenant :
- une étape d'assemblage en série d'une pluralité d'empilements (10) de cellules électrochimiques de manière à former une structure périphérique, et
- une étape de serrage de la structure périphérique afin de comprimer les cellules des empilements (10).

## Patentansprüche

1. Brennstoffzelle (1), umfassend eine Vielzahl von Modulen (M1, M2), die derart in Reihe miteinander angebracht sind, dass sie eine periphere Struktur bilden, wobei jedes Modul (M1, M2) zwei Endorgane (21) und einen Stapel elektrochemischer Zellen (10) umfasst, der zwischen zwei Endorganen (21) angeordnet ist, wobei jedes Endorgan (21) eine Montagefläche (21A) im Kontakt mit dem einen der Enden eines Stapels (10) und eine Schnittstellenfläche (21B) im Kontakt mit einer anderen Schnittstellenfläche (21B) eines anderen Endorgans (21) aufweist, wobei die Montagefläche (21A) und die Schnittstellenfläche (21B) in einem Winkel α winklig beabstandet sind, der zwischen 0,5° und 60° liegt.

2. Brennstoffzelle (1) nach vorangehendem Anspruch, wobei jedes Modul (M1) Haltemittel aufweist, die die Endorgane (21) verbindet, um den Stapel (10) zwischen den Endorganen (21) gespannt zu halten.

3. Brennstoffzelle (1) nach vorangehendem Anspruch, wobei die Haltemittel (40) in Form von Federblättern (40) vorliegen.

4. Brennstoffzelle (1) nach einem der Ansprüche 1 bis 3, wobei jedes Endorgan (21) eine Vielzahl interner Leitungen umfasst, die ausgelegt sind, um die Zirkulation von Fluiden in den Stapeln (10) zu gestatten.

5. Brennstoffzelle (1) nach einem der Ansprüche 1 bis 4, wobei die Module (M1) direkt in Reihe angeordnet sind.

6. Brennstoffzelle (1) nach einem der vorangehenden Ansprüche, umfassend Spannmittel (30), die an der äußeren Peripherie der Brennstoffzelle (1) derart angebracht sind, dass die Stapel (10) komprimiert werden.

7. Brennstoffzelle (1) nach Anspruch 6, wobei die Spannmittel einen Gurt umfassen, der am Umfang der peripheren Struktur angebracht ist.

8. Brennstoffzelle (1) nach einem der Ansprüche 6 bis 7, wobei jedes Endorgan (21) eine Montagerille umfasst, die ausgelegt ist, um mit den Spannmitteln zusammenzuwirken.

9. Verfahren zur Herstellung einer Brennstoffzelle (1) nach einem der Ansprüche 1 bis 8, wobei das Verfahren umfasst:
- einen Schritt des Zusammenbauens in Reihe einer Vielzahl von Stapeln (10) elektrochemischer Zellen derart, dass eine periphere Struktur gebildet wird, und
- einen Schritt des Spannens der peripheren Struktur, um die Zellen der Stapel (10) zu komprimieren.

## Claims

1. A fuel cell (1) comprising a plurality of modules (M1, M2) mounted in series with each other so as to form a peripheral structure, each module (M1, M2) comprising two end members (21) and a stack of electrochemical cells (10) mounted between two end members (21), each end member (21) comprising a mounting face (21A) in contact with one of the ends of a stack (10) and an interface face (21B) in contact with another interface face (21B) of another end member (21), the mounting face (21A) and the interface face (21B) being angularly spaced apart by an angle a, which is between 0.5° to 60°.

2. The fuel cell (1) according to the preceding claim, wherein each module (M1) comprises holding means connecting the end members (21) in order to hold the stack (10) restrained between the end members (21).

3. The fuel cell (1) according to the preceding claim, wherein the holding means (40) are in the form of spring leaves (40).

4. The fuel cell (1) according to one of claims 1 to 3, wherein each end member (21) comprises a plurality of inner ducts configured to allow fluid circulation in the stacks (10).

5. The fuel cell (1) of one of claims 1 to 4, wherein the modules (M1) are directly mounted in series.

6. The fuel cell (1) according to one of the preceding claims, comprising clamping means (30) mounted at the external periphery of the fuel cell (1) so as to compress the stacks (10).

7. The fuel cell (1) according to claim 6, wherein the clamping means comprise a strap mounted at the circumference of the peripheral structure.

8. The fuel cell (1) of one of claims 6 to 7, wherein each end member (21) comprises a mounting groove configured to cooperate with the clamping means.

9. A method for making a fuel cell (1) according to one of claims 1 to 8, said method comprising:
- a step of assembling in series a plurality of stacks (10) of electrochemical cells so as to form a peripheral structure, and
- a step of clamping the peripheral structure in order to compress the cells of the stacks (10).
